# EUROPEAN PATENT SPECIFICATION

(11) **EP 1 905 177 B1**
(45) Date of publication and mention of the grant of the patent: **04.03.2009**
(21) Application number: 06763997.1
(22) Date of filing: 30.06.2006
(51) Int. Cl.: H04B 15/02, H04B 1/38

(54) **COMMUNICATIONS DEVICES INCLUDING INTEGRATED DIGITAL CAMERAS OPERATING AT DIFFERENT FREQUENCIES AND RELATED METHODS**
KOMMUNIKATIONSEINRICHTUNGEN MIT INTEGRIERTEN, MIT VERSCHIEDENEN FREQUENZEN ARBEITENDEN DIGITALKAMERAS UND DIESBEZÜGLICHE VERFAHREN
DISPOSITIFS DE COMMUNICATION COMPRENANT DES CAMERAS NUMERIQUES INTEGREES FONCTIONNANT A DIFFERENTES FREQUENCES ET PROCEDES ASSOCIES

(30) Priority: 15.07.2005 US 182373
(43) Date of publication of application: 02.04.2008
(73) Proprietor: Sony Ericsson Mobile Communications AB, 221 88 Lund (SE)
(72) Inventor: PERSSON, Truls, S-24733 Södra Sandby (SE)
(74) Representative: Valea AB
(86) International application number: PCT/EP2006/063747
(87) International publication number: WO 2007/009866

(56) References cited:
- EP-A- 0 803 997
- US-A- 5 745 848
- US-A1- 2002 142 724
- US-A1- 2004 116 168
- US-A1- 2005 255 881
- PATENT ABSTRACTS OF JAPAN vol. 1996, no. 03, 29 March 1996 (1996-03-29) & JP 07 303079 A (KYOCERA CORP), 14 November 1995 (1995-11-14)

## Description

### Field Of The Invention

The present invention relates to the field of electronics, and more particularly, to communications devices including integrated digital cameras and related methods.

### Background

The integration of a digital camera into a cellular radiotelephone has become common. Typically, a chip set for the digital camera functionality is provided separate from the components providing radiotelephone functionality. More particularly, a digital signal processor (DSP) may be provided for the digital camera functionality separate from a central processor unit (CPU) providing and/or coordinating other functionalities of the camera/phone.

Moreover, a system clock for the camera phone may provide a system clock signal (such as a 13 MHz clock signal) that is used by the CPU, the digital camera, and a transceiver for the radiotelephone. The camera chip set may include a phase-locked-loop (PLL) that uses the system clock signal to generate a higher frequency camera clock signal (for example, having a frequency of approximately 100 MHz), and the camera clock signal may be used to operate the camera DSP and/or an optical sensor of the digital camera.

The camera clock signal, however, may include harmonic components that interfere with radiotelephone frequencies received at the radiotelephone transceiver. In a GSM radiotelephone, for example, the radiotelephone transceiver may transmit communications to a base station at frequencies in the range of 1850 MHz to 1910 MHz, and the radiotelephone transceiver may receive communications from the base station at frequencies in the range of 1930 MHz to 1990 MHz. More particularly, harmonic components of the camera clock signal may interfere with reception of communications at frequencies in the range of 1930 MHz to 1990 MHz at the radiotelephone transceiver.

Accordingly, electromagnetic shielding may be used to shield the radiotelephone transceiver from interference generated by the camera clock signal. For example, the chip set for the digital camera functionality may be provided within a shielded enclosure. It may be difficult, however, to provide adequate shielding around the chip set for the digital camera functionality because it may not be possible to completely enclose the chip set. For example, at least a lens of the digital camera may require an opening in the electromagnetic shielding to allow operation thereof.

In an alternative, the central processor may block operation of radiotelephone communications when the digital camera is being used, and/or the central processor may block operation of the digital camera during radiotelephone communications. This alternative, however, may undesirably limit operation of camera and/or radiotelephone functionalities. Moreover, use of the camera may result in missed communications initiated by others (such as incoming radiotelephone calls, text messages, SMS messages, etc.), and/or missed roaming and/or location updates.

Accordingly, there continues to exist a need in the art for improved methods and systems that reduce interference between digital cameras and transceivers in integrated camera/phone devices.

### Summary

According to some embodiments of the present invention, a communications device may include a receiver, a tunable clock signal generator, a digital camera, and a central processor. The receiver may be configured to receive communications over an air interface using a plurality of frequency channels, and the tunable clock signal generator may be configured to generate a tunable clock signal responsive to a tuning input. The digital camera may be configured to capture digital images and to operate responsive to the tunable clock signal. The central processor may be coupled to the receiver, the tunable clock signal generator, and the digital camera. Moreover, the central processor may be configured to determine at least one of the plurality of frequency channels over which communications are likely to be received and to generate the tuning input for the tunable clock signal generator responsive to determining the at least one of the plurality of frequency channels over which communications are likely to be received.

More particularly, the tunable clock signal generator may include a voltage controlled oscillator, and/or the central processor may be configured to receive an identification of the at least one of the plurality of frequency channels from a base station through the receiver. The central processor may also be configured to generate the tuning input for the tunable clock signal generator so that interference from the digital camera is reduced with respect to the at least one of the plurality of frequency channels over which communications are likely to be received.

The central processor may be configured to determine a first frequency channel over which communications are likely to be received at a first time and to generate a first tuning input for the tunable clock signal generator responsive to determining the first frequency channel. The central processor may also be configured to determine a second frequency channel over which communications are likely to be received at a second time and to generate a second tuning input for the tunable clock signal generator responsive to determining the second frequency channel. Moreover, the first and second frequency channels may be different, and the first and second tuning inputs may be different. More particularly, the tunable clock signal generator may be configured to generate a first tunable clock signal having a first frequency responsive to the first tuning input and to generate a second tunable clock signal having a second frequency responsive to the second tuning input, and the first and second frequencies may be different.

The digital camera may include a camera clock signal generator configured to generate a camera clock signal responsive to the tunable clock signal, and the camera clock signal generator may be a phase-locked-loop (PLL). In addition, a frequency of the camera clock signal may be greater than a frequency of the tunable clock signal. Moreover, the digital camera may include a digital signal processor coupled to the clock signal generator and an optical sensor coupled to the digital signal processor. The optical sensor may be configured to convert an optical image to an electrical signal, and the digital signal processor may be configured to process the electrical signal using the camera clock signal. The communications device may also include a transmitter coupled to the central processor, the transmitter may be configured to transmit communications over the air interface, and the central processor may be configured to process the communications transmitted and received over the air interface.

According to other embodiments of the present invention, methods may be provided for operating a communications device including a digital camera configured to capture a digital image and a receiver configured to receive communications over an air interface using a plurality of frequency bands. At least one of the plurality of frequency channels over which communications are likely to be received may be determined, and a tunable clock signal may be generated responsive to determining the at least one of the plurality of frequency channels over which communications are likely to be received. Accordingly, the digital camera may be operated using the tunable clock signal.

Generating the tunable clock signal may include generating a tunable clock signal input and providing the tunable clock signal input to a voltage controlled oscillator. In addition, determining at least one of the plurality of frequency channels over which communications are likely to be received may include receiving an identification of the at least one of the plurality of frequency channels from a base station through the receiver. Moreover, generating the tunable clock signal may include generating the tunable clock signal so that interference from the digital camera with respect to the at least one of the plurality of frequency channels over which communications are likely to be received is reduced.

Determining the at least one of the plurality of frequency channels may include determining a first frequency channel over which communications are likely to be received at a first time and determining a second frequency channel over which communications are likely to be received at a second time. In addition, generating the tunable clock signal may include generating a first tunable clock signal having a first frequency at the first time and generating a second tunable clock signal having a second frequency at the second time. Moreover, the first and second frequencies may be different.

Operating the digital camera may include generating a camera clock signal responsive to the tunable clock signal. For example, the camera clock signal may be generated using a phase-locked-loop (PLL). Moreover, a frequency of the camera clock signal may be greater than a frequency of the tunable clock signal. In addition, operating the digital camera may include converting an optical image to an electrical signal and processing the electrical signal using the camera clock signal. Furthermore, communications may be transmitted from the communications device over the air interface.

According to still additional embodiments of the present invention, a communications device may include a receiver, a digital camera, and a central processor coupled to the receiver and digital camera. The receiver may be configured to receive communications over an air interface, and the digital camera may be configured to capture digital images and to operate at different frequencies responsive to a frequency tuning input. The central processor may be configured to process communications received through the receiver and to generate a first frequency tuning input so that the digital camera operates at a first frequency. After generating the first frequency tuning input, the central processor may be configured to generate a second frequency tuning input so that the digital camera operates at a second frequency. Moreover, the first and second frequencies may be different.

US2004/116168 discloses a cellular phone including a radio circuit block, and a control block including a CPU for controlling operations of the cellular phone and treating data for the cellular phone. The control block retains an interrupt signal when the radio circuit block receives a radio signal, and delivers the interrupt signal to the CPU after completion of the receipt of the radio signal by the radio circuit block. The problem that harmonics of the clock signal supplied to an integrated camera can interfere with the receiver of a communication device is here solved by suspending the camera clock signals when the receiver is active.

### Brief Description Of The Drawings

Figure 1 is a block diagram illustrating communications devices according to embodiments of the present invention.

Figure 2 is a flow chart illustrating operations of communications devices according to embodiments of the present invention.

### Detailed Description

Specific exemplary embodiments of the invention now will be described with reference to the accompanying drawings. This invention may, however, be embodied in many different forms and should not be construed as limited to the embodiments set forth herein. Rather, these embodiments are provided so that this disclosure will be thorough and complete, and will fully convey the scope of the invention to those skilled in the art. In the drawing, like numbers refer to like elements. It will be understood that when an element is referred to as being "connected" or "coupled" to another element, it can be directly connected or coupled to the other element or intervening elements may be present. Furthermore, "connected" or "coupled" as used herein may include wirelessly connected or coupled.

The terminology used herein is for the purpose of describing particular embodiments only and is not intended to be limiting of the invention. As used herein, the singular forms "a", "an" and "the" are intended to include the plural forms as well, unless expressly stated otherwise. It will be further understood that the terms "includes," "comprises," "including" and/or "comprising," when used in this specification, specify the presence of stated features, integers, steps, operations, elements, and/or components, but do not preclude the presence or addition of one or more other features, integers, steps, operations, elements, components, and/or groups thereof.

Unless otherwise defined, all terms (including technical and scientific terms) used herein have the same meaning as commonly understood by one of ordinary skill in the art to which this invention belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

It will be understood that although the terms first and second are used herein to describe various elements, these elements should not be limited by these terms. These terms are only used to distinguish one element from another element. Thus, a first frequency below could be termed a second frequency, and similarly, a second frequency may be termed a first frequency without departing from the teachings of the present invention. As used herein, the term "and/or" includes any and all combinations of one or more of the associated listed items. The symbol "/" is also used as a shorthand notation for "and/or".

Various embodiments of the present invention are described below with reference to block diagrams and/or operational illustrations (e.g., flowcharts) illustrating methods, apparatus and computer program products according to various embodiments of the invention. It will be understood that each block of the block diagrams and/or operational illustrations, and combinations of blocks in the block diagrams and/or operational illustrations, can be implemented by analog and/or digital hardware, and/or computer program instructions. These computer program instructions may be provided to a processor of a general purpose computer, special purpose computer, ASIC; and/or other programmable data processing apparatus, such that the instructions, which execute via the processor of the computer and/or other programmable data processing apparatus, create means for implementing the functions/acts specified in the block diagrams and/or operational illustrations. Accordingly, it will be appreciated that the block diagrams and operational illustrations support apparatus, methods and computer program products.

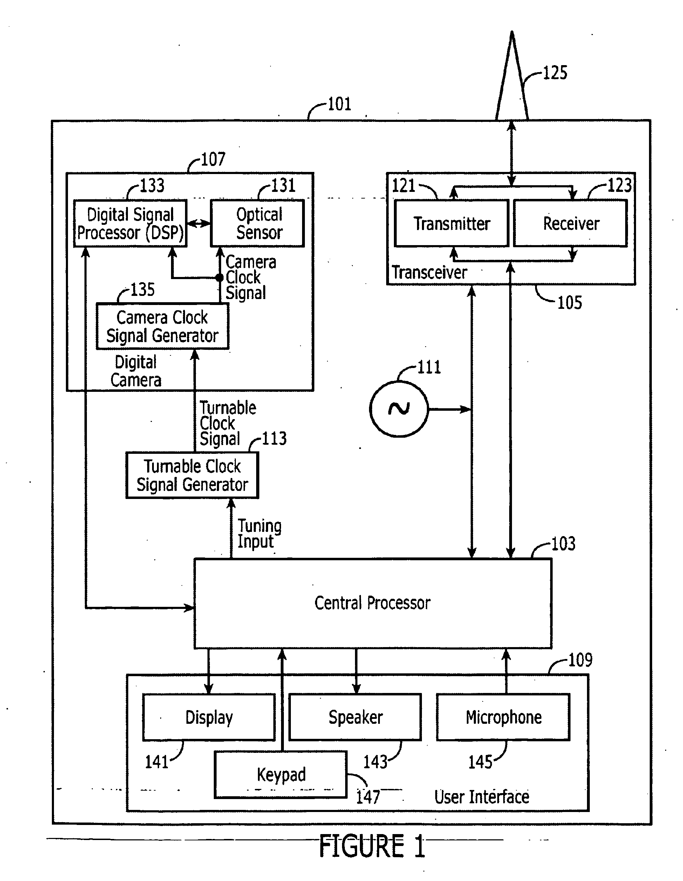

Communication devices according to embodiments of the present invention are illustrated in Figure 1. As shown in Figure 1, a communications device 101 may include a central processor **103** (such as a central processing unit or CPU), a transceiver **105,** a digital camera **107**, a user interface **109**, a fixed frequency clock signal generator **111,** and a tunable clock signal generator **113**. **The** transceiver 105 may include a transmitter **121** and a receiver **123** coupled to an antenna **125**. The digital camera 107 may include an optical sensor 131, a digital signal processor **133**, and a camera clock signal generator **135**, and the user interface **109** may include a display **141**, a speaker **143**, a microphone **145**, and a keypad **147**. More particularly, the tunable clock signal generator **113** may be a voltage controlled oscillator (VCO), and the camera clock signal generator **135** may be a phase-locked-loop (PLL).

Accordingly, the central controller **103** and the transceiver **105** may operate to transmit and/or receive radio communications over an air interface using a system clock signal generated by the fixed frequency clock signal generator **111**. The system clock signal, for example, may have a frequency of about 13 MHz. More particularly, the transmitter **121** may be configured to transmit communications generated by the central processor **103** using one of a plurality of uplink frequency channels of an air interface, and the receiver **123** may be configured to receive communications using one of a plurality of downlink frequency channels of the air interface. By way of example, the GSM air interface may provide a plurality of 1 kHz wide uplink frequency channels (for transmissions from a mobile terminal to a base station) over an uplink frequency band in the range of about 1850 MHz to about 1910 MHz and a plurality of 1 kHz wide downlink frequency channels (for transmissions from a base station to a mobile terminal) over an downlink frequency band in the range of about 1930 MHz to about 1990 MHz.

In a cellular communications network, a plurality of fixed radiotelephone base stations may provide communications for respective geographic areas (also referred to as cells). By providing that adjacent base stations are allocated ' use of different uplink and downlink frequency channels according to a frequency reuse pattern, interference between base stations can be reduced, and a capacity of the communications network can be increased. Accordingly, each base station may be allocated a sub-set of the downlink frequency channels for transmissions to mobile terminals and a sub-set of the uplink frequency channels for reception from the mobile terminals in the respective geographic area. Each base station may transmit control information within the respective-geographic area identifying the sub-sets of uplink and down-link frequency channels being used by the base station. In addition or in an alternative, a base station may assign uplink and downlink frequency channels to the communications device **101** when a communications link is established.

A transceiver of a communications device within the geographic area receiving the control information can thus tune to the appropriate uplink and/or down-link frequency channel(s) and/or the appropriate control frequency channel(s). Accordingly, the central processor **103** of the communications device **101** can determine particular frequency channels that are likely to be used, and the particular frequency channels that are likely to be used will change as the communications device **101** moves from one base station to another. More particularly, the control processor **103** can determine one or a plurality of the down-link frequency and/or control channels that are likely to be used for reception at the receiver **123**.

During a radiotelephone voice communication, for example, a particular uplink frequency channel and a particular downlink frequency channel may be assigned to the communications device **101.** A voice signal generated by the microphone **145** may be processed by the central processor **103** and transmitted using the transmitter 121 and the antenna **125** on the assigned uplink frequency channel. Voice information from a distant party may be received on the assigned downlink frequency channel using the antenna **125** and receiver **123**, processed using central processor **103**, and output on speaker **143**. In addition or in an alternative, text messages (such as SMS messages) may be transmitted and/or received, and/or network browsing operations may be provided. Moreover, control information may be received over a downlink control frequency channel(s).

The-digital camera **107** may be configured to capture digital images. More particularly, the optical sensor **131** may be configured to convert an optical image to an electrical signal, and the digital signal processor **133** may be configured to process the electrical signal from the optical sensor **131** to provide a digital image. The digital signal processor **133** and/or the optical sensor **131** may operate using the camera clock signal generated by the camera clock signal generator **135**. More particularly, the camera clock signal may be generated by the camera clock signal generator **135** using the tunable clock signal generated by the tunable clock signal generator **113** so that a frequency of the camera clock signal is a function of a frequency of the tunable clock signal and so that the frequency of the camera clock signal is greater than a frequency of the tunable clock signal. Accordingly, different frequencies of the tunable clock signal (controllable by a tuning input provided from the central processor **103** to the tunable clock signal generator **113**) may result in corresponding different frequencies of the camera clock signal. For example, the camera clock signal may have a frequency that is about 1 order of magnitude (or more) greater than a frequency of the tunable clock signal. For example, the tunable clock signal may have a frequency in the range of about 10 MHz to about 15 MHz, and the camera clock signal may have a frequency in the range of about 90 MHz to about 110 MHz.

A digital image from the digital signal processor **133** may be stored in memory in the digital camera **107** and/or in memory in the central processor **103.** In addition or in an alternative, a digital image from the digital signal processor **133** and/or from memory may be processed by central processor **103** and transmitted over the air interface using the transmitter **121** and antenna **125**.

Harmonic components of the camera clock signal generated by the camera clock signal generator **135** may interfere with some downlink frequency channels of a given air interface. Not all downlink frequency channels of the air interface, however, are equally likely to be received at a given time. According to some embodiments of the present invention, the central processor **103** may thus be configured to determine at least one of the plurality of downlink frequency channels over which communications are more likely to be received and to generate a tuning input for the tunable clock signal generator **113** so that interference from the digital camera **107** (and more particularly from the camera clock signal generated by the camera clock signal generator **135**) is reduced with respect to the at least one of the plurality of downlink frequency channels over which communications are likely to be received.

When initially turned on, the central processor **103** and/or receiver **123** may scan for a control frequency channel transmitted by a base station providing service for the cell within which the communications device **101** is located. Once the control frequency channel is identified, the central processor **103** can generate the tuning input for the tunable clock signal generator **113** to provide that interference from the camera clock signal (generated by the camera clock signal generator **135**) is reduced with respect to the identified control frequency channel. Moreover, information provided on the control frequency channel may identify a sub-set of downlink frequency channels used by the base station for voice communications, text messaging, internet browsing, etc. According, the central processor **103** can generate the tuning input for the tunable clock signal generator **113** to provide that interference from the camera clock signal (generated by the camera clock signal generator **135**) is reduced with respect to the identified control frequency channel and/or sub-set of other identified downlink frequency channels that are likely to be received at receiver **123.**

In addition or in an alternative, the base station may identify a particular downlink frequency channel to be used by the receiver **123** when a communication (such as a radiotelephone voice communication) is established with the communications device **101.** While establishing the communication, the central processor **103** may thus generate new (*i.e.*, different) tuning input for the tunable clock signal generator **113** to provide that interference from the camera clock signal (generated by the camera clock signal generator **135**) is reduced with respect to the particular downlink frequency channel for the communication being established. Once the communication is ended, the central processor **103** may again apply the earlier tuning input to reduce interference with respect to the control frequency channel.

When the communications device **101** is moved to a second cell serviced by a second base station, the central processor **103** and/or receiver 123 may scan for a second control frequency channel transmitted by the second base station. Once the second control frequency channel is identified, the central processor **103** can generate another tuning input for the tunable clock signal generator **113** to provide that interference from the camera clock signal (generated by the camera clock signal generator **135**) is reduced with respect to the second control frequency channel from the second base station. Moreover, information provided on the second control frequency channel may identify a second sub-set of downlink frequency channels used by the base station for voice communications, text messaging, internet browsing, etc. Accordingly, the central processor **103** can generate the second tuning input for the tunable clock signal generator **113** to provide that interference from the camera clock signal (generated by the camera clock signal generator **135**) is reduced with respect to the second identified control frequency channel and/or the second sub-set of identified downlink frequency channels that are likely to be received at receiver **123.**

Accordingly, a frequency of the camera clock signal (generated by the camera clock signal generator **135)** may change when the communications device **101** switches from service with one base station to service with another base station, when a communication session (such as a voice radiotelephone communication, a text message session, a network browsing session, etc.) is initiated or terminated, etc. By way of example, interference with downlink frequency channels of an air interface generated by the digital camera **107** using different tuning inputs, different tunable clock signal frequencies, and/or different camera clock signal frequencies may be characterized. Accordingly, a correlation of tuning inputs with respect to downlink frequency channel interference may be provided, and the central processor **103** can use this table to provide an appropriate tuning input responsive to determining the frequency channel(s) over which communications are likely to be received at the receiver **123**. Accordingly, interference from the digital camera **107** may be reduced with respect to operations of the receiver **123**.

Interference from the digital camera **107** in the downlink frequency band may thus be tuned to reduce interference with respect to downlink frequency channels currently being used (or likely to be used) by the communications device. Stated in other words interference from the digital camera **107** in the downlink frequency band may be tuned to downlink frequency channels not currently being used (or not likely to be used) by the communications device.

As discussed above, the tunable clock signal generator **113** may be a voltage controlled oscillator (VCO). More particularly, the tunable clock signal generator 113 may be a voltage controlled crystal oscillator (VCXO), and the frequency of the tunable clock signal generated by the VCXO may be controlled by providing the tuning input at different voltage levels corresponding to different frequencies. For example, the tuning input can be generated by a digital-to-analog converter (DAC) included in the central processor **103**, with different digital inputs to the DAC being used to provide corresponding different frequencies for the tunable clock signal and corresponding different frequencies for the camera clock signal.

While the tunable clock signal generator **113** is illustrated as being separate from the digital camera **107** and the camera clock signal generator **135**, the tunable clock signal generator **113** may be included as a component of the digital camera **107** and/or the camera clock signal generator **135**. Accordingly, separate tunable clock signal and camera clock signal generators may not be required. In an alternative, functionalities of the camera clock signal generator **135** and the tunable clock signal generator **113** may both be provided outside the digital camera 107 and/or combined.

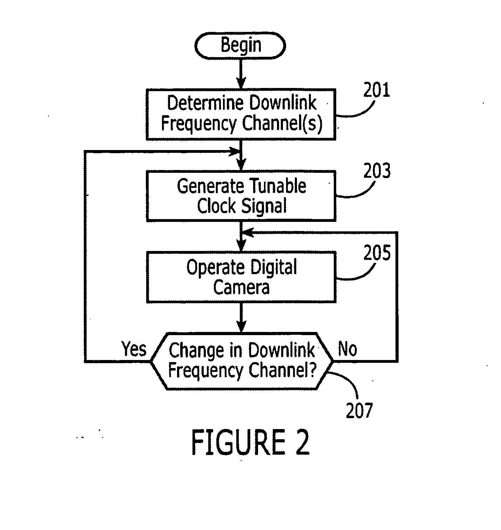

Figure 2 is a flow chart illustrating operations of communications devices according to embodiments of the present invention. At block **201**, the central processor **103** and/or receiver **123** may determine one or a plurality of frequency channels (such as downlink and/or control frequency channels) over which communications are likely to be received. For example, frequency channel information may be provided by a network base station servicing the cell in which the communications device is located.

- At block **203**, a tunable clock- signal may be generated with a frequency of the tunable clock signal being determined based on the frequency channel(s) over which communications are likely to be received. At block **205**, operation of the digital camera **107** may proceed using the tunable clock signal. As discussed above, a camera clock signal may be generated within the digital camera with a frequency of the camera clock signal being a function of the tunable clock signal and with the frequency of the camera clock signal being greater than the frequency of the tunable clock signal. By generating the tunable clock signal responsive to determining the frequency channel(s) over which communications are likely to be received, interference from the digital camera can be reduced with respect to communications received at the communications device.

At block **207**, the communications device may monitor for changes in frequency channels that are likely to be used for communications received at the communications device. A change may occur for example, when the communications device is moved to a new cell serviced by a new base station, and/or when a particular downlink frequency channel is assigned for a communications session for the communications device. As long as there is no change, the digital camera may continue operation using the same tunable clock signal frequency. When there is a change at block **207**, the tunable clock signal may be generated with a new frequency at block **203**, and operations of the digital camera may proceed at block 205 using the tunable clock signal at the new frequency.

Accordingly, the digital camera may operate at different frequencies at different times to reduce interference with particular frequency channels that are likely to be received at different times. The digital camera can thus be used during a radiotelephone voice communication with reduced interference. Moreover, a likelihood of missing an incoming call request, an incoming text message, etc. while using the digital camera may be reduced.

In the drawings and specification, there have been disclosed embodiments of the invention and, although specific terms are employed, they are used in a generic and descriptive sense only and not for purposes of limitation, the scope of the invention being set forth in the following claims.

## Claims

1. A communications device (101) including:
a receiver (123) configured to receive communications over an air interface using a plurality of frequency channels;
a tunable clock signal generator (113) configured to generate a tunable clock signal having a frequency that varies responsive to a tuning input;
a digital camera (107) configured to capture digital images, the digital camera (107) being configured to operate responsive to the tunable clock signal; and
a processor (103) coupled to the receiver, the tunable clock signal generator (113), and the digital camera, **characterized in that** the processor (103) is configured to determine a subset of the plurality of frequency channels over which communications are likely to be received and to generate the tuning input for the tunable clock signal generator (113) responsive to determining the subset of the plurality of frequency channels over which communications are likely to be received wherein the subset includes at least two of the frequency channels.

2. A communications device (101) according to claim 1, wherein the tunable clock signal generator (113) comprises a voltage controlled oscillator.

3. A communications device (101) according to any of the claims 1-2, wherein the processor (103) is configured to receive an identification of the subset of the plurality of frequency channels from a base station through the receiver.

4. A communications device (101) according to any of the claims 1- 3,
wherein the processor (103) is configured to generate the tuning input for the tunable clock signal generator (113) so that interference from the digital camera (107) with respect to the subset of the plurality of frequency channels over which communications are likely to be received is reduced.

5. A communications device (101) according to any of the claims 1-4, wherein the processor (103) is configured to determine a first subset of the plurality of frequency channels over which communications are likely to be received at a first time and to generate a first tuning input for the tunable clock signal generator (113) responsive to determining the first subset of the plurality of frequency channels and to determine a second subset of the plurality of frequency channels over which communications are likely to be received at a second time and to generate a second tuning input for the tunable clock signal generator (113) responsive to determining the second subset of the plurality of frequency channels, wherein the first and second subsets of the plurality of frequency channels are different, wherein the first and second tuning inputs are different, and wherein the first and second subsets of the plurality of frequency channels each include at least two frequency channels.

6. A communications device (101) according to claim 5, wherein the first subset of the plurality of frequency channels are received through the receiver (123) from a first base station and wherein the second subset of the plurality of frequency channels are received through the receiver (123) from a second base station different than the first base station.

7. A communications device (101) according to any of the claims 5-6, wherein the tunable clock signal generator (113) is configured to generate a first tunable clock signal having a first frequency responsive to the first tuning input and to generate a second tunable clock signal having a second frequency responsive to the second tuning input, wherein the first and second frequencies are different.

8. A communications device (101) according to any of the claims 1-7, wherein the digital camera (107) includes a camera clock signal generator configured to generate a camera clock signal responsive to the tunable clock signal.

9. A communications device (101) according to claim 8, wherein the camera clock signal generator comprises a phase-locked-loop (PLL).

10. A communications device (101) according to any of the claims 8- 9,
wherein a frequency of the camera clock signal is greater than a frequency of the tunable clock signal.

11. A communications device (101) according to any of the claims 8-10,
wherein the digital camera, (107) includes a digital signal processor (133) coupled to the clock signal generator and an optical sensor coupled to the digital signal processor (133) wherein the optical sensor is configured to convert an optical image to an electrical signal and wherein the digital signal processor (133) is configured to process the electrical signal using the camera clock signal.

12. A communications device (101) according to any of the claims I-11, further comprising:
a transmitter coupled to the processor, wherein the transmitter is configured to transmit communications over the air interface and wherein the processor (103) is configured to process the communications transmitted and received over the air interface.

13. A method of operating a communications device (101) including a digital camera (107) configured to capture a digital image and a receiver (123) configured to receive communications over an air interface using a plurality of frequency bands, the method being **characterized by** the steps of:
determining (201) a subset of the plurality of frequency channels over which communications are likely to be received;
generating (203) a tunable clock signal responsive to determining the subset of the plurality of frequency channels over which communications are likely to be received; and
operating (205) the digital camera (107) using the tunable clock signal wherein the subset includes at least two of the frequency channels.

14. A method according to claim 13, wherein generating the tunable clock signal includes generating a tunable clock signal input, and providing the tunable clock signal input to a voltage controlled oscillator.

15. A method according to any of the claims 13-14, wherein determining the subset of the plurality of frequency channels over which communications are likely to be received includes receiving an identification of the subset of the plurality of frequency channels from a base station through the receiver.

16. A method according to any of the claims 13-15, wherein generating the tunable clock signal comprises generating the tunable clock signal so that interference from the digital camera (107) with respect to the subset of the plurality of frequency channels over which communications are likely to be received is reduced.

17. A method according to any of the claims 13-16, wherein determining the subset of the plurality of frequency channels comprises determining a first subset of the plurality of frequency channels over which communications are likely to be received at a first time and determining a second subset of the plurality of frequency channels over which communications are likely to be received at a second time, and
wherein generating the tunable clock signal comprises generating a first tunable clock signal having a first frequency at the first time and generating a second tunable clock signal having a second frequency at the second time wherein the first and second subsets of the plurality of frequency channels are different, wherein the first and second tuning inputs are different, and wherein the first and second subsets of the plurality of frequency channels each include at least two frequency channels.

18. A method according to claim 17, wherein the first subset of the plurality of frequency channels are received through the receiver (123) from a first base station and wherein the second subset of the plurality of frequency channels are received through the receiver (123) from a second base station different than the first base station.

19. A method according to any of the claims 17- 18, wherein the tunable clock signal generator (113) is configured to generate a first tunable clock signal having a first frequency responsive to the first tuning input and to generate a second tunable clock signal having a second frequency responsive to the second tuning input,
wherein the first and second frequencies are different.

20. A method according to any of the claims 13-19, wherein operating the digital camera (107) comprises generating a camera clock signal responsive to the tunable clock signal.

21. A method according to claim 20, wherein generating the camera clock signal comprises generating the camera clock signal using a phase-locked-loop (PLL).

22. A method according to any of the claims 20-21, wherein a frequency of the camera clock signal is greater than a frequency of the tunable clock signal.

23. A method according to any of the claims 20-22, wherein operating the digital camera (107) comprises converting an optical image to an electrical signal and processing the electrical signal using the camera clock signal.

24. A method according to any of the claims 13-23, further comprising:
transmitting communications over the air interface.

## Patentansprüche

1. Kommunikationsgerät (101), welches aufweist:
einen Empfänger (123), der so konfiguriert ist, dass er auf mehreren Frequenzkanälen über eine Luftschnittstelle Kommunikation empfangt;
einen abstimmbaren Taktsignalgenerator (113), der so konfiguriert ist, dass er ein abstimmbares Taktsignal mit einer Frequenz erzeugt, die gemäß einem Abstimmeingangssignal variiert;
eine Digitalkamera (107) für Digitalbilder, die so konfiguriert ist, dass sie anhand des abstimmbaren Taktsignals betrieben werden kann; und
einen mit Empfänger (123), abstimmbaren Taktsignalgenerator (113) und Digitalkamera gekoppelten Prozessor (103),
**dadurch gekennzeichet**,
dass der Prozessor (103) so konfiguriert ist, dass er eine Untermenge aus den mehreren Frequenzkanälen, auf denen Kommunikation vermutlich empfangen wird, festlegt und das Abstimmeingangssignal entsprechend der Festlegung der Untermenge aus den mehreren Frequenzkanälen, auf denen Kommunikation vermutlich empfangen wird, für den abstimmbaren Taktsignalgenerator (113) erzeugt, wobei die Untermenge mindestens zwei der Frequenzkanäle enthält.

2. Kommunikationsgerät (101) nach Anspruch 1, wobei der abstimmbare Taktsignalgenerator (113) einen spannungsgesteuerten Oszillator aufweist.

3. Kommunikationsgerät (101) nach einem der Ansprüche 1-2, wobei der Prozessor (103) so konfiguriert ist, dass er über den Empfänger (123) eine Identifizierung der Untermenge aus den mehreren Frequenzkanälen von einer Basisstation empfängt.

4. Kommunikationsgerät (101) nach einem der Ansprüche 1-3, wobei der Prozessor (103) so konfiguriert ist, dass er das Abstimmeingangssignal für den abstimmbaren Taktsignalgenerator (113) so erzeugt, dass Störungen durch die T3igitalkaznera (107) in der Untermenge aus den mehreren Frequenzkazzälen, auf denen Kommunikation vermutlich empfangen wird, verringert.

5. Koznznunikationsgerät (101) nach einem der Ansprüche 1-4, wobei der Prozessor (103) so konfiguriert ist, dass er eine erste Untermenge aus den mehreren Frequenzkanälen, auf denen Kommunikation vermutlich bei einem ersten Mal empfangen wird, festlegt und ein erstes Abstimmeingangssignal für den abstimmbaren Taktsignalgenerator (113) entsprechend der Festlegung der ersten Untermenge aus den mehreren Frequenzkanälen erzeugt, sowie eine zweite Untermenge aus den mehreren Frequenzkanälen, auf denen Kommunikation vermutlich bei einem zweiten Mal empfangen wird, festlegt und ein zweites Abstimmeingangssignal für den abstimmbaren Taktsignalgenerator (113) entsprechend der Festlegung der zweiten Untermenge aus den mehreren Frequenzkanälen erzeugt, wobei sich die Untermengen aus den mehreren Frequenzkanälen sowie das erste und zweite Abstimmeingangssignal unterscheiden, und die erste und zweite Untermenge aus den mehreren Frequenzkanälen jeweils mindestens zwei Frequenzkanäle enthalten.

6. Kommunikationsgerät (101) nach Anspruch 5, wobei die erste Untermenge aus den mehreren Frequenzkanälen über den Empfänger (123) von einer ersten Basisstation und die zweite Untermenge aus den mehreren Frequenzkanälen über den Empfänger (123) von einer zweiten Basisstation, welche sich von der ersten unterscheidet, empfangen werden.

7. Kommunikationsgerät (101) nach einem der Ansprüche 5-6, wobei der abstimmbare Taktsignalgenerator (113) so konfiguriert ist, dass er ein erstes abstimmbares Taktsignal mit einer ersten Frequenz entsprechend dem ersten Abstimmeingangssignal und ein zweites abstimmbares Taktsignal mit einer zweiten Frequenz entsprechend dem zweiten Abstimmeingangssignal erzeugt, wobei sich die erste von der zweiten Frequenz unterscheidet.

8. Kommunikationsgerät (101) nach einem der Ansprüche I-7, wobei die Digitalkamera (107) einen Kamerataktsignalgenerator aufweist, der so konfiguriert ist, dass er ein Kamerataktsignal anhand des abstimmbaren Taktsignals erzeugt.

9. Kommunikationsgerät (101) nach Anspruch 8, wobei der Kamerataktsignalgenerator einen phasenstarren Schaltkreis (PLL-Kreis) aufweist.

10. Kommunikationsgerät (101) nach einem der Ansprüche 8-9, wobei eine Frequenz des Kamerataktsignals höher ist als eine Frequenz des abstimmbaren Taktsignals.

11. Kommunikationsgerät (101) nach einem der Ansprüche 8-10, wobei die Digitalkamera (107) einen mit dem Taktsignalgenerator gekoppelten Digitalsignalprozessor (133) sowie einen mit dem Digitalsignalprozessor (133) gekoppelten optischen Sensor aufweist, wobei der optische Sensor so konfiguriert ist, dass er ein optisches Bild in ein elektrisches Signal umwandelt, und der Digitalsignalprozessor (133) so konfiguriert ist, dass er das elektrische Signal anhand des Kamerataktsignals verarbeitet.

12. Kommunikationsgerät (101) nach einem der Ansprüche 1-11, welches weiterhin aufweist:
einen mit dem Prozessor (103) gekoppelten Sender, wobei der Sender so konfiguriert ist, dass er Kommunikation über die Luftschnittstelle überträgt, und der Prozessor (103) so konfiguriert ist, dass er die über die Luftschnittstelle übertragene und empfangene Kommunikation verarbeitet.

13. Verfahren für den Betrieb eines Kommunikationsgeräts (101) mit einer Digitalkamera (107), die Digitalbilder aufnehmen kann, und einem Empfänger (123), der Kommunikation über eine Luftschnittstelle auf mehreren Frequenzbändern empfangen kann, wobei das Verfahren gekenntzeichnet ist durch folgende Schritte:
Festlegung (201) einer Untermenge aus den mehreren Frequenzkanälen, auf denen Kommunikation vermutlich empfangen wird;
Erzeugung (203) eines abstimmbaren Taktsignals entsprechend der Festlegung der Untermenge aus den mehreren Frequenzkanälen, auf denen Kommunikation vermutlich empfangen wird; und
Betrieb (205) der Digitalkamera (107) anhand des abstimmbaren Taktsignals, wobei die Untermenge mindestens zwei der Frequenzkanäle enthält.

14. Verfahren nach Anspruch 13, wobei die Erzeugung des abstimmbaren Taktsignals die Erzeugung eines abstimmbaren Takteingangssignals und dessen Zuführung zu einem spannungsgesteuerten Oszillator umfasst.

15. Verfahren nach einem der Ansprüche 13-14, wobei die Festlegung der Untermenge aus den mehreren Frequenzkanälen, auf denen Kommunikation vermutlich empfangen wird, den Empfang einer Identifizierung der Untermenge aus den mehreren Frequenzkanälen über den Empfänger (123) von einer Basisstation umfasst.

16. Verfahren nach einem der Ansprüche 13-15, wobei das abstimmbare Taktsignal so erzeugt wird, dass Störungen durch die Digitalkamera (107) in der Untermenge aus den mehreren Frequenzkanälen, auf denen Kommunikation vermutlich empfangen wird, verringert werden.

17. Verfahren nach einem der Ansprüche 13-16, wobei die Festlegung der Untermenge aus den mehreren Frequenzkanälen die Festlegung einer ersten Untermenge aus den mehreren Frequenzkanälen, auf denen Kommunikation vermutlich bei einem ersten Mal empfangen wird, sowie die Festlegung einer zweiten Untermenge aus den mehreren Frequenzkanälen, auf denen Kommunikation vermutlich bei einem zweiten Mal empfangen wird, umfasst, und wobei die Erzeugung des abstimmbaren Taktsignals die Erzeugung eines ersten Abstimmsignals mit einer ersten Frequenz beim ersten Mal und eines zweiten Abstimmsignals mit einer zweiten Frequenz beim zweitem Mal umfasst, wobei sich die erste von der zweiten Untermenge aus den mehreren Frequenzen sowie das erste vom zweiten Abstimmeingangssignal unterscheiden, und wobei die erste und zweite Untermenge aus den mehreren Frequenzkanälen, jeweils mindestens zwei Frequenzkanäle enthalten.

18. Verfahren Anspruch 17, wobei die erste Untermenge aus den mehreren Frequenzkanälen über den Empfänger (123) von einer ersten Basisstation und die zweite Untermenge aus den mehreren Frequenzkanälen über den Empfänger (123) von einer zweiten Basisstation, welche sich von der ersten unterscheidet, empfangen werden.

19. Verfahren nach einem der Ansprüche 17-18, wobei der abstimmbar Taktsignalgenerator (113) so konfiguriert ist, dass er ein erstes abstimmbares Taktsignal mit einer ersten Frequenz entsprechend dem ersten Abstimmeingangssignal und ein zweites abstimmbares Taktsignal mit einer zweiten Frequenz entsprechend dem zweiten Abstimneingangssignal erzeugt, wobei sich die erste von der zweiten Frequenz unterscheidet.

20. Verfahren nach einem der Ansprüche 13-19, wobei der Betrieb der Digitalkamera (107) die Erzeugung eines Kamerataktsignals anhand des abstimmbaren Taktsignals aufweist.

21. Verfahren nach Anspruch 20, wobei das Kamerataktsignal mittels eines phasenstarren Schaltkreises (PLL-Kreis) erzeugt wird.

22. Verfahren nach einem der Ansprüche 20-21, wobei eine Frequenz des Kamerataktsignals höher ist als eine Frequenz des abstimmbaren Taktsignals.

23. Verfahren nach einem der Ansprüche 20-22, wobei der Betrieb der Digitalkamera (107) die Umwandlung eines optischen Bildes in ein elektrisches Signal sowie die Verarbeitung des elektrischen Signals anhand des Kamerataktsignals aufweist.

24. Verfahren nach einem der Ansprüche 13-23, welches weiterhin aufweist:
Übertragung von Kommunikation über die Luftschnittstelle.

## Revendications

1. Dispositif (101) de communications comprenant :
un récepteur (123) configuré pour recevoir des communications par une interface d'air en utilisant de multiples canaux de fréquences ;
un générateur de signal d'horloge accordable (113) configuré pour générer un signal d'horloge accordable ayant une fréquence qui varie en réponse à une entrée d'accord ;
un appareil de prise de vues numérique (107) configuré pour capturer des images numériques, l'appareil de prise de vues numérique (107) étant configuré pour fonctionner en réponse au signal d'horloge accordable ; et
un processeur (103) couplé au récepteur, au générateur (113) de signal d'horloge accordable et à l'appareil de prise de vues numérique, **caractérisé en ce que** le processeur (103) est configuré pour déterminer un sous-ensemble des multiples canaux de fréquences sur lesquels il est probable que des communications soient reçues et pour générer l'entrée d'accord pour le générateur de signal d'horloge accordable (113) en réponse à la détermination du sous-ensemble des multiples canaux de fréquences sur lesquels il est probable que des communications soient reçues, le sous-ensemble comprenant au moins deux des canaux de fréquences.

2. Dispositif (101) de communications selon la revendication 1, dans lequel le générateur (113) de signal d'horloge accordable comprend un oscillateur commandé en tension.

3. Dispositif (101) de communications selon l'une des revendications 1 et 2, dans lequel le processeur (103) est configuré pour recevoir d'une station de base, par l'intermédiaire du récepteur, une identification du sous-ensemble des multiples canaux de fréquences.

4. Dispositif (101) de communications selon l'une quelconque des revendications 1 à 3, dans lequel le processeur (103) est configuré pour générer l'entrée d'accord pour le générateur (113) de signal d'horloge accordable afin qu'une interférence provenant de l'appareil de prise de vues numérique (107) par rapport au sous-ensemble des multiples canaux de fréquences sur lesquels il est probable que les communications soient reçues soit réduite.

5. Dispositif (101) de communications selon l'une quelconque des revendications 1 à 4, dans lequel le processeur (103) est configuré pour déterminer à un premier moment un premier sous-ensemble des multiples canaux de fréquences sur lesquels il est probable que des communications soient reçues et pour générer une première entrée d'accord pour le générateur (113) de signal d'horloge accordable en réponse à la détermination du premier sous-ensemble des multiples canaux de fréquences, et pour déterminer à un second moment un second sous-ensemble des multiples canaux de fréquences sur lesquels il est probable que des communications soient reçues et pour générer une seconde entrée d'accord pour le générateur (113) de signal d'horloge accordable en réponse à la détermination du second sous-ensemble des multiples canaux de fréquences, les premier et second sous-ensembles des multiples canaux de fréquences étant différents, les première et seconde entrées d'accord étant différentes, et les premier et second sous-ensembles des multiples canaux de fréquences comprenant chacun au moins deux canaux de fréquences.

6. Dispositif (101) de communications selon la revendication 5, dans lequel le premier sous-ensemble des multiples canaux de fréquences est reçu par l'intermédiaire du récepteur (123) depuis une première station de base et dans lequel le second sous-ensemble des multiples canaux de fréquences est reçu par l'intermédiaire du récepteur (123) depuis une seconde station de base différente de la première station de base.

7. Dispositif (101) de communications selon l'une des revendications 5 et 6, dans lequel le générateur (113) de signal d'horloge accordable est configuré pour générer un premier signal d'horloge accordable ayant une première fréquence en réponse à la première entrée d'accord et pour générer un second signal d'horloge accordable ayant une seconde fréquence en réponse à la seconde entrée d'accord, les première et seconde fréquences étant différentes.

8. Dispositif (101) de communications selon l'une quelconque des revendications 1 à 7, dans lequel l'appareil de prise de vues numérique (107) comprend un générateur de signal d'horloge d'appareil de prise de vues configuré pour générer un signal d'horloge d'appareil de prise de vues en réponse au signal d'horloge accordable.

9. Dispositif (101) de communications selon la revendication 8, dans lequel le générateur de signal d'horloge d'appareil de prise de vues comprend une boucle à phase asservie (PLL).

10. Dispositif (101) de communications selon l'une des revendications 8 à 9, dans lequel une fréquence du signal d'horloge de l'appareil de prise de vues est supérieure à une fréquence du signal d'horloge accordable.

11. Dispositif (101) de communications selon l'une quelconque des revendications 8 à 10, dans lequel l'appareil de prise de vues numérique (107) comprend un processeur (133) de signaux numériques couplé au générateur de signal d'horloge et un capteur optique couplé au processeur (133) de signaux numériques, le capteur optique étant configuré pour convertir un signal optique en un signal électrique, et le processeur (133) de signaux numériques étant configuré pour traiter le signal électrique en utilisant le signal d'horloge de l'appareil de prise de vues.

12. Dispositif (101) de communications selon l'une quelconque des revendications 1 à 11, comportant en outre :
un émetteur couplé au processeur, l'émetteur étant configuré pour émettre des communications par l'interface d'air et le processeur (103) étant configuré pour traiter les communications émises et reçues par l'interface d'air.

13. Procédé pour faire fonctionner un dispositif (101) de communications comprenant un appareil de prise de vues numérique (107) configuré pour capturer une image numérique et un récepteur (123) configuré pour recevoir des communications par une interface d'air en utilisant de multiples bandes de fréquences, le procédé étant **caractérisé par** les étapes qui consistent :
à déterminer (201) un sous-ensemble des multiples canaux de fréquences sur lesquels il est probable que des communications soient reçues ;
à générer (203) un signal d'horloge accordable en réponse à la détermination du sous-ensemble des multiples canaux de fréquences sur lesquels il est probable que des communications soient reçues ; et
à faire fonctionner (205) l'appareil de prise de vues numérique (107) en utilisant le signal d'horloge accordable, le sous-ensemble comprenant au moins deux des canaux de fréquences.

14. Procédé selon la revendication 13, dans lequel la génération du signal d'horloge accordable comprend la génération d'une entrée de signal d'horloge accordable, et la fourniture de l'entrée de signal d'horloge accordable à un oscillateur commandé en tension.

15. Procédé selon l'une des revendications 13 et 14, dans lequel la détermination du sous-ensemble des multiples canaux de fréquences sur lesquels il est probable que des communications soient reçues comprend la réception d'une identification du sous-ensemble des multiples canaux de fréquences, depuis une station de base en passant par le récepteur.

16. Procédé selon l'une quelconque des revendications 13 à 15, dans lequel la génération du signal d'horloge accordable comprend la génération du signal d'horloge accordable afin qu'une interférence provenant de l'appareil de prise de vues numérique (107), par rapport au sous-ensemble des multiples canaux de fréquences sur lesquels il est probable que des communications soient reçues, soit réduite.

17. Procédé selon l'une quelconque des revendications 13 à 16, dans lequel la détermination du sous-ensemble des multiples canaux de fréquences comprend la détermination à un premier moment d'un premier sous-ensemble des multiples canaux de fréquences sur lesquels il est probable que des communications soient reçues et la détermination, à un second moment, d'un second sous-ensemble des multiples canaux de fréquences sur lesquels il est probable que des communications soient reçues, et dans lequel la génération du signal d'horloge accordable comprend la génération d'un premier signal d'horloge accordable ayant une première fréquence, au premier moment, et la génération d'un second signal d'horloge accordable ayant une seconde fréquence, au second moment, les premier et second sous-ensembles des multiples canaux de fréquences étant différents, les première et seconde entrées d'accord étant différentes, et les premier et second sous-ensembles des multiples canaux de fréquences comprenant chacun au moins deux canaux de fréquences.

18. Procédé selon la revendication 17, dans lequel le premier sous-ensemble des multiples canaux de fréquences est reçu depuis une première station de base en passant par le récepteur (123) et dans lequel le second sous-ensemble des multiples canaux de fréquence est reçu, en passant par le récepteur (123), depuis une seconde station de base différente de la première station de base.

19. Procédé selon l'une des revendications 17 et 18, dans lequel le générateur (113) de signal d'horloge accordable est configuré pour générer un premier signal d'horloge accordable ayant une première fréquence en réponse à la première entrée d'accord et pour générer un second signal d'horloge accordable ayant une seconde fréquence en réponse à la seconde entrée d'accord, les première et seconde fréquences étant différentes.

20. Procédé selon l'une quelconque des revendications 13 à 19, dans lequel à mise en fonctionnement de l'appareil de prise de vues numérique (107) comprend la génération d'un signal d'horloge d'appareil de prise de vues en réponse au signal d'horloge accordable.

21. Procédé selon la revendication 20, dans lequel la génération du signal d'horloge de l'appareil de prise de vues comprend la génération du signal d'horloge de l'appareil de prise de vues en utilisant une boucle à phase asservie (PLL).

22. Procédé selon l'une des revendications 20 et 21, dans lequel la fréquence du signal d'horloge de l'appareil de prise de vues est supérieure à la fréquence du signal d'horloge accordable.

23. Procédé selon l'une quelconque des revendications 20 à 22, dans lequel la mise en fonctionnement de l'appareil de prise de vues numérique (107) comprend la conversion d'une image optique en un signal électrique et le traitement du signal électrique en utilisant le signal d'horloge de l'appareil de prise de vues.

24. Procédé selon l'une quelconque des revendications 13 à 23, comprenant en outre :
la transmission de communications par l'interface d'air.
